# FASCICULE DE BREVET EUROPEEN

(11) **EP 0 677 153 B1**
(45) Date de publication et mention de la délivrance du brevet: **23.08.2000**
(21) Numéro de dépôt: 94927703.2
(22) Date de dépôt: 20.09.1994
(51) Int. Cl.: F16D 25/08

(54) **DISPOSITIF D'EMBRAYAGE DE VEHICULE AUTOMOBILE DU TYPE TIRE ET A ACTIONNEMENT HYDRAULIQUE**
GEZOGENE HYDRAULISCHE KRAFTFAHRZEUGKUPPLUNG
PULL-TYPE HYDRAULIC MOTOR VEHICLE CLUTCH

(30) Priorité: 29.09.1993 FR 9311575
(43) Date de publication de la demande: 18.10.1995
(73) Titulaire: VALEO, 75017 Paris (FR)
(72) Inventeur: VILLATA, Gino, I-14021 Buttigliera D'Asti (IT)
(74) Mandataire: Gamonal, Didier
(86) Numéro de dépôt international: FR9401095
(87) Numéro de publication internationale: WO9509312

(56) Documents cités:
- EP-A- 0 497 164
- FR-A- 2 517 000
- GB-A- 2 087 026
- US-A- 5 183 141
- PATENT ABSTRACTS OF JAPAN vol. 15, no. 441 (M-1177) 11 Novembre 1991 & JP,A,03 186 620 (NACHI FUJIKOSHI) 14 Août 1991

## Description

La présente invention concerne un dispositif d'embrayage à friction, notamment pour véhicule automobile.

L'invention concerne plus particulièrement un embrayage du type tiré dont un exemple de réalisation est décrit et représenté dans le document FR-A-2.304.826.

Un tel type d'embrayage comporte un disque de friction solidarisé en rotation de manière débrayable à un arbre d'entraînement en rotation, un organe de commande propre à commander le débrayage du disque de friction avec l'arbre d'entraînement lorsqu'il est l'objet d'un effort de traction axiale, et une butée de débrayage qui est susceptible d'agir axialement en traction sur l'organe de commande de l'embrayage.

Un tel embrayage, comme cela est illustré dans le document FR-A-2 304826, peut être du type à commande mécanique, c'est-à-dire du type comportant une fourchette de commande du débrayage qui est réalisée sous la forme d'un levier articulé sur le carter d'embrayage et dont l'extrémité interne agit axialement sur un manchon coulissant dont une extrémité est liée axialement par exemple à la bague extérieure du roulement appartenant à la butée de débrayage.

Comme cela est expliqué dans ce document, l'utilisation de la fourchette de commande mécanique du débrayage, dans un sens opposé à celui permettant d'assurer le débrayage, permet, lors de l'assemblage du groupe motopropulseur, d'assurer la solidarisation en traction axiale entre un élément lié à la bague intérieure du roulement de la butée de débrayage et une pièce d'accostage attelée aux leviers de débrayage ou au diaphragme que comporte l'embrayage, cette solidarisation étant assurée par un effet d'emboîtement élastique également appelé clipsage.

On connaît également différentes conceptions d'un embrayage qui comportent un dispositif hydraulique d'actionnement comportant au moins un piston d'actionnement, dont une extrémité agit sur la butée de débrayage pour solliciter axialement la butée de débrayage dans un premier sens pour provoquer le débrayage lorsque le dispositif hydraulique d'actionnement est alimenté en fluide provenant d'une source de fluide sous pression telle que par exemple un cylindre émetteur d'embrayage.

Un exemple d'un tel embrayage à actionnement hydraulique est décrit et représenté dans le document US-A-3 955660 dans lequel le piston d'actionnement est réalisé sous la forme d'un manchon cylindrique monté coulissant sur une portée cylindrique de guidage fixée au carter d'embrayage.

Un tel type d'embrayage à actionnement hydraulique qui ne comporte plus de fourchette mécanique d'actionnement de la butée de débrayage ne permet pas de réaliser la solidarisation initiale, par emboîtement élastique, entre l'organe de sortie de la butée de débrayage et la pièce d'accostage.*

Dans le document US 5 183 141, conforme au préambule de la revendication 1, il est prévu pour l'assemblage un outil amovible. Néanmoins cette disposition n'est pas simple.

La présente invention a pour but de proposer une nouvelle conception d'un dispositif d'embrayage du type tiré à actionnement hydraulique qui remédie aux inconvénients qui viennent d'être mentionnés.

Ce problème est résolu selon l'invention par la partie caractérisante de la revendication 1.

Grâce à l'invention on réalise de manière simple et économique la solidarisation initiale, par emboîtement élastique, entre l'organe de sortie de la butée de débrayage et la pièce d'accostage.

En outre, grâce aux logements, l'outil ne paut s'échapper lors de l'emboîtement axial de la butée avec sa pièce d'accostage associée.

Selon d'autres caractéristiques de l'invention :
- l'outil amovible est un levier dont le corps prend appui contre un bord en vis-à-vis de l'ouverture du carter ;
- la surface périphérique du piston comporte une série de logements adjacents agencés en couronne ;
- chaque logement est délimité latéralement par deux cloisons parallèles à l'axe du piston et axialement par un fond perpendiculaire à l'axe du piston ;
- l'extrémité de l'outil agencée à l'intérieur du carter est réalisée en forme de fourchette dont chacune des branches comporte un pion qui est reçu dans un logement formé à la surface périphérique du piston ;
- les deux logements qui reçoivent les pions sont diamétralement opposés ;
- l'une des extrémités axiales du piston d'actionnement est reliée à la bague extérieure du roulement de la butée de débrayage par une virole sertie qui s'étend en regard d'un collet radial extérieur formé à ladite extrémité du piston ;
- chaque logement est délimité latéralement par les bords en vis-à-vis de deux pattes adjacentes qui s'étendent axialement depuis le corps de la virole sertie
- chaque logement est délimité latéralement par deux cloisons formées sur la surface périphérique du piston et qui s'étendent axialement depuis ladite face radiale du collet.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en section axiale illustrant une partie d'un carter d'embrayage et d'un dispositif d'actionnement de la butée de débrayage réalisé conformément aux enseignements de l'invention ;
- la figure 2 est une demi-vue extérieure en coupe axiale de l'équipage mobile du dispositif de commande du débrayage ;
- la figure 3 est une vue en section axiale illustrant une variante de réalisation de l'équipage mobile de la figure 1 ;
- la figure 4 est une demi-vue extérieure de l'équipage mobile illustré à la figure 3 ;
- la figure 5 est une vue similaire à celle de la figure 3 illustrant une autre variante de réalisation de l'équipage mobile ;
- la figure 6 est une vue partielle similaire à celle de la figure 1 illustrant une variante de réalisation du dispositif hydraulique d'actionnement de la butée de débrayage ;
- la figure 7 est une vue schématique en perspective illustrant une conception en forme de fourchette en une seule pièce de l'outil amovible d'actionnement de la butée de débrayage et
- la figure 8 est une vue similaire à celle de la figure 7 illustrant une variante de réalisation de la fourchette amovible.

Sur l'ensemble des figures, les composants identiques ou similaires sont désignés par les mêmes chiffres de référence.

L'ensemble de l'embrayage n'est pas illustré sur les figures et ne sera pas décrit en détail et on pourra notamment se reporter aux documents cités précédemment pour en connaître divers exemples de réalisation.

Pour mémoire, on notera que l'embrayage de véhicule automobile comporte usuellement un disque de friction, doté à sa périphérie externe de garnitures de friction, un plateau de réaction, un plateau de pression mobile axialement par rapport au plateau de réaction, un couvercle solidaire du plateau de réaction, et des moyens élastiques à action axiale prenant appui sur le couvercle et sur le plateau de pression pour serrer les garnitures de friction entre les plateaux de pression et de réaction, solidaires en rotation du vilebrequin du moteur, tandis que le disque de friction est calé en rotation sur l'arbre d'entrée de la boîte de vitesses.

Les moyens élastiques à action axiale appartiennent au dispositif débrayeur de l'embrayage et comportent soit un diaphragme comme dans le document FR-A-2 304 826, ou des ressorts à boudin associés à des leviers de débrayage comme dans le document US-A-3 995 660.

Pour mémoire on rappellera, dans un embrayage du type tiré à diaphragme, que ledit diaphragme prend appui par la partie périphérique externe de sa rondelle Belleville sur le couvercle et par la périphérie interne de sa dite rondelle Belleville sur un bossage d'appui, usuellement fractionné, du plateau de réaction.

Une pièce d'accostage est associée aux leviers de débrayage ou au diaphragme et pour désengager, ou débrayer, l'embrayage il faut agir en traction sur la pièce d'accostage à l'aide d'une butée de débrayage attelée à la pièce d'accostage.

L'actionnement de la butée est réalisé à l'aide d'un dispositif d'actionnement hydraulique comprenant, de manière décrite ci-après, un piston 26,34 mobile axialement, un organe de guidage 16 fixe axialement, une chambre hydraulique d'actionnement 38 du piston 26,34, délimitée par l'organe de guidage 16 et ledit piston, et un circuit d'alimentation en fluide sous pression comprenant au moins une conduite d'alimentation qui relie la chambre d'actionnement du piston à une source de pression, par exemple un cylindre émetteur d'embrayage, soumis à l'action de la pédale de débrayage.

La source de pression est agencée, de manière connue en soi, à l'extérieur du carter 10.

Ce carter est en forme générale de cloche et présente une paroi radiale d'extrémité 12 sur la surface interne 14 de laquelle est fixée axialement et en rotation une douille 16, également appelée trompette, qui délimite une surface externe de portée cylindrique 18 d'axe X-X.

Le carter renferme notamment une butée de débrayage 20 qui est constituée pour l'essentiel par un roulement à billes 22 dont la bague extérieure 24 est liée, ici par sertissage, en translation axiale à un manchon d'actionnement 26 et dont la bague intérieure 28 tournante se prolonge par une douille 30 comportant notamment une gorge radiale extérieure 32 prévue pour recevoir des moyens de solidarisation par emboîtement axial élastique (non représentés) avec un organe de couplage agissant sur la pièce d'accostage (non représentés), comme décrits par exemple dans les documents FR-A-2 304 826 et FR-A-2 653 195 (US-A-5,113,989). De manière connue en soi, l'organe de couplage, tel qu'un jonc, est élastiquement déformable radialement et vient an prise avec le flanc avant de la gorge 32 et avec une portée de la pièce d'accostage.

L'actionnement de la butée de débrayage 20 est réalisé au moyen d'un dispositif d'actionnement hydraulique constitué par un piston d'actionnement formé par le corps cylindrique creux 34 du manchon 26, dont la surface cylindrique interne 36 coopère à l'arrière avec la portée cylindrique 18 pour délimiter une chambre hydraulique d'actionnement 38.

La douille 16 constitue ainsi un organe de guidage pour le piston 26,34 et est en relation de cylindre piston avec ledit piston 26,34.

On notera que le piston 26,34 est susceptible de solliciter axialement la butée de débrayage 20, ledit piston présentant de manière précitée une extrémité qui agit sur la butée de débrayage 20. Cette butée 20 est liée en translation axiale au piston 26,34 an étant attelée à celui-ci ici par sertissage.

Bien entendu cet attelage peut être réalisé par emmanchement à force de la bague extérieure 24 de la butée 20 sur l'extrémité associée du piston 26,34, ladite extrémité étant alors épaulée comme divulgué dans le document DE-A-28 15 971.

Bien entendu comme décrit dans le document FR-A-2 304 826 on peut inverser les structures, la bague intérieure de la butée 20 étant alors liée axialement au piston 26,34, tandis que la bague extérieure de la butée 20 est tournante an étant attelée par emboîtement axial à la pièce d'accostage.

Plus précisément la chambre hydraulique d'actionnement 38 est délimitée axialement par deux coupelles d'étanchéité 40 et 42 portées respectivement par le piston 26, 34 et par la trompette 16. Pour ce faire l'extrémité arrière du piston 26,34 comporte une collerette dirigée vers l'axe de l'ensemble, tandis que la douille 16 porte une bague calée axialement par un circlips.

Les coupelles 40,42 prennent appui respectivement sur la collerette et sur la bague, un soufflet d'étanchéité intervenant entre l'arrière du piston et de la douille 16.

Un ressort de précharge intervient entre les coupelles 40,42 pour solliciter le piston 26 en direction de la paroi 12 et exercer une action sur le dispositif débrayeur de l'embrayage afin d'assurer un bon fonctionnement du roulement de la butée 20.

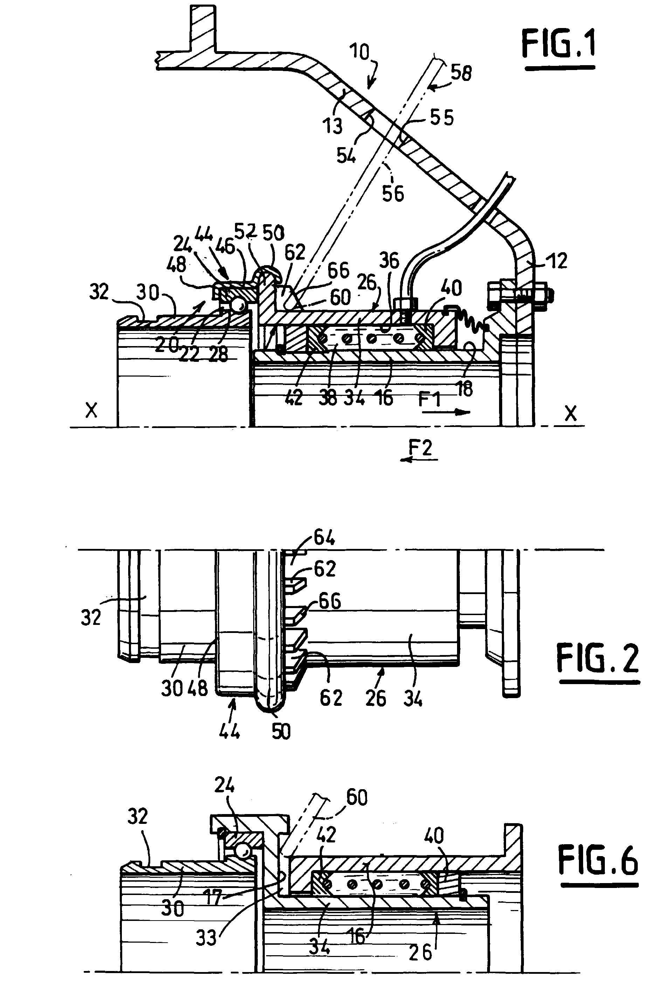

Lorsque la chambre d'actionnement 38 est alimentée en fluide sous pression, par exemple par un cylindre émetteur d'embrayage (non représenté) relié à la conduite de la figure 1 traversant la portion 13, il se produit un déplacement axial du piston 34 selon la direction X-X et dans le sens FI, de la gauche vers la droite en considérant la figure 1, de manière à provoquer un débrayage de l'embrayage par l'intermédiaire de la butée de débrayage 20.

La solidarisation entre la bague extérieure 24 du roulement 22 de la butée de débrayage 20 et le piston en forme de manchon 26, 34 est assurée au moyen d'une virole 44 en tôle emboutie sertie sur le manchon 26.

La virole 44 comporte une jupe annulaire principale 46, un premier bord radial interne d'extrémité rabattu 48 qui coopère avec une face radiale en vis-à-vis de la bague extérieure 24 et un second bord radial d'extrémité rabattu 50 qui recouvre la portion en vis-à-vis d'un collet radial extérieur 52, qui s'étend d'un seul tenant radialement depuis l'extrémité axiale du manchon 34 du piston 26.

Conformément à l'invention, la portion conique 13 de la paroi du carter comporte une ouverture 54, ici en forme de fenêtre 54, pour permettre le passage du corps 56 d'un outil amovible 58 qui est conçu pour permettre de solliciter mécaniquement la butée de débrayage axialement dans le sens F2, opposé au sens Fl d'actionnement hydraulique.

L'extrémité de l'outil 58, située à l'intérieur du carter, coopère avec une portion complémentaire du piston d'actionnement 26,34.

A cet effet, l'extrémité 60 de l'outil amovible 58 qui est située à l'intérieur du carter est susceptible d'être reçue dans un logement 62 formé à la périphérie externe du manchon 34.

Grâce à cette disposition l'outil est attelé circonférentiellement au manchon en sorte que l'on réalise un bon emboîtement axial de la butée 20 sur sa pièce d'accostage associée et ce de manière sûre.

Dans le mode de réalisation illustré sur la figure 1, l'outil 58 est illustré sous une forme la plus simple correspondant par exemple à un tournevis dont le corps 56 est introduit dans le carter par la fenêtre 54 et dont l'extrémité 60 est reçue dans un logement 62.

Dans le mode de réalisation illustré sur les figures 1 et 2, le manchon 34 comporte une série de logements adjacents 62 agencés en couronne.

Comme on peut le voir sur la figure 2, chaque logement 62 est délimité axialement par une portion de la face en vis-à-vis 64 du collet radial 52 et latéralement par les faces en vis-à-vis de deux cloisons 66 qui s'étendent axialement depuis le collet radial 52 en direction de la paroi radiale 12.

Avantageusement le manchon 34 avec ses cloisons 66 est réalisé par moulage, en étant par exemple en matière plastique renforcée par des fibres ou en fonte.

Ainsi on tire parti du manchon 34 notamment de son collet 52 et ce de manière économique.

Le déplacement axial de la butée de débrayage 20 dans le sens F2 est effectué très facilement au moyen de l'outil 58 que l'on fait fonctionner comme un levier en lui faisant prendre appui sur le bord en vis-à-vis 55 de la fenêtre 54, de forme rectangulaire, et en exerçant un couple tendant à faire pivoter le corps 56 de l'outil 58, dans le sens horaire en considérant la figure 1.

Cette possibilité d'actionnement mécanique du piston par l'outil 58 est utilisée lors de l'assemblage de l'embrayage afin d'assurer la solidarisation axiale de la bague intérieure 28, 30 avec la pièce d'accostage au moyen d'un organe de couplage, et ceci selon une technique d'emboîtement axial telle que celle décrite et représentée dans les documents FR-A-2.304.826 et 30 FR-A-2.653.195.

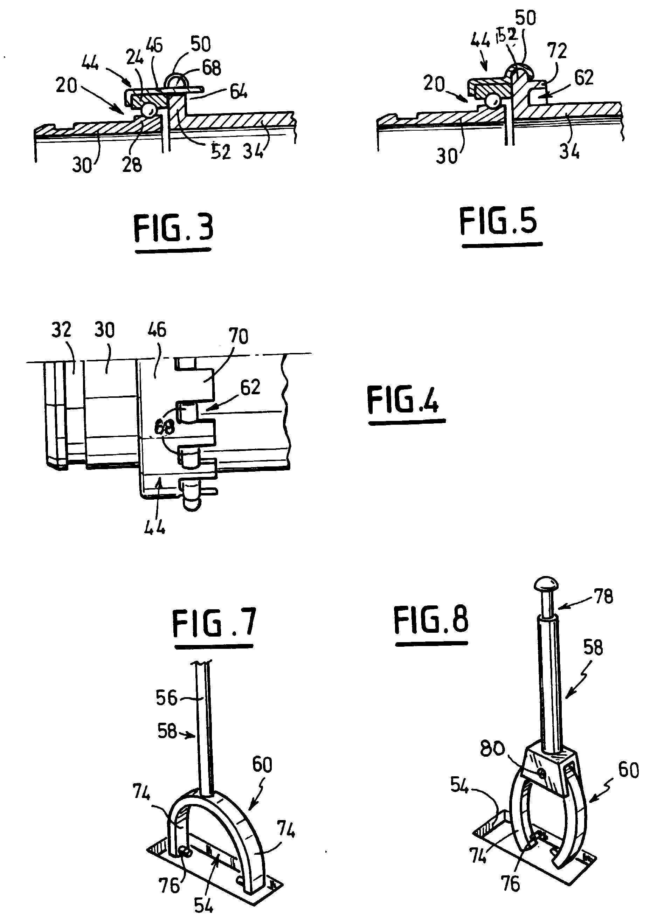

Dans la variante de réalisation illustrée aux figures 3 et 4, le collet radial extérieur 52 du manchon 34 comporte des indentations 68 dans chacune desquelles s'étend une patte 70 réalisée venue de matière, ici par découpage, avec le corps 46 de la virole sertie 44.

Deux pattes axiales adjacentes 70 délimitent latéralement un logement 62 destiné à recevoir une extrémité d'un outil amovible.

Dans la variante de réalisation illustrée sur la figure 5, les logements 62 sont réalisés venus de matière par moulage avec le manchon 34 et le collet radial extérieur 52 et ils sont également délimités radialement vers l'extérieur par une cloison axiale complémentaire 72 qui permet l'introduction de l'extrémité d'un outil amovible et d'éviter l'échappement de cette dernière lors de l'actionnement mécanique du piston 26.

Dans la variante de réalisation illustrée sur la figure 6, le manchon 34 est intérieur, en étant entouré par la douille 16, et l'extrémité 60 de l'outil peut être introduite entre le bord 33 du manchon et la face radiale en vis-à-vis 17 de la trompette 16 dans laquelle est montée la bague extérieure 24 du roulement 22.

On a représenté sur la figure 7 un outil 58 en forme de fourchette dont le corps en forme de tige 56 se prolonge par une extrémité inférieure en forme de fourche dont chacune des branches 74 comporte un pion d'entraînement 76, les deux pions étant prévus pour être reçus dans des logements diamétralement opposés 62 formés à la périphérie du manchon 34 du piston d'actionnement.

Dans le cas d'un outil 58 en forme de fourchette rigide, comme celui illustré à la figure 7, la fenêtre 54 rectangulaire possède bien entendu des dimensions adaptées pour permettre le passage de l'extrémité 60 en forme de fourche.

Dans le mode de réalisation illustré sur la figure 8, l'outil amovible 58 en forme de fourchette est réalisé comme une pince à sucre ou à glaçon, c'est-à-dire qu'il comporte un mécanisme 78 permettant de replier, puis de déployer, les branches 74 autour d'un axe d'articulation 80, cette conception permettant de réduire les dimensions de la fenêtre 54.

Bien entendu dans tous les cas, après montage par encliquetage de la butée sur sa pièce d'accostage (non visible) à l'aide de l'outil 58, on peut reboucher la fente 54.

Dans tous les cas, grâce aux logements 62, l'outil 58 ne peut s'échapper lors de l'emboîtement axial de la butée 20 avec sa pièce d'accostage associée.

## Revendications

1. Dispositif d'embrayage à friction du type tiré, notamment pour un véhicule automobile, en combinaison avec un outil amovible d'actionnement mécanique, comportant un carter d'embrayage (10) à l'intérieur duquel est agencé un dispositif de commande du débrayage qui comporte une butée de débrayage (20) et un dispositif hydraulique d'actionnement (26,34) comportant au moins un piston d'actionnement (26,34), dont une extrémité agit sur la butée de débrayage (20) pour solliciter axialement ladite butée dans un premier sens (Fl) pour provoquer le débrayage lorsque le dispositif hydraulique d'actionnement est alimenté en fluide sous pression, caractérisé en ce que la butée de débrayage (20) est liée en translation axiale au piston (26, 34) par l'intermédiaire d'un collet radial (52) que présente le piston (26, 34) à cet effet le carter (10) comporte une ouverture (54) pour permettre l'introduction de l'outil amovible (58) d'actionnement mécanique (20) pour solliciter axialement la butée de débrayage (20) dans un second sens (F2) opposé au premier sens (Fl), en ce que l'extrémité (60) de l'outil amovible (58), située à l'intérieur du carter (10), est reçue dans un logement complémentaire (62) formé à la surface périphérique du piston d'actionnement (26, 34) pour atteler circonférentiellement l'outil au piston et en ce que le fond (64) de chaque logement est constitué par la face radiale en vis à vis du collet (52) du piston (24, 36).

2. Dispositif d'embrayage selon la revendication 1, caractérisé en ce que l'outil amovible (58) est un levier dont le corps (56) prend appui contre un bord en vis-à-vis (55) de la fenêtre (54) du carter (10).

3. Dispositif d'embrayage selon la revendication 1 ou 2, caractérisé en ce que la surface périphérique du piston comporte une série de logements adjacents (62) agencés en couronne.

4. Dispositif selon la revendication 3, caractérisé en ce que chaque logement (62) est délimité latéralement par deux cloisons (66) parallèles à l'axe (X-X) du piston et axialement par un fond (64) perpendiculaire à l'axe du piston d' actionnement.

5. Dispositif d'embrayage selon la revendication 1, caractérisé en ce que l'extrémité (60) de l'outil agencée à l'intérieur du carter (10) est réalisée en forme de fourchette dont chacune des branches (74) comporte un pion (76) qui est reçu dans un logement (62) formé à la surface périphérique du piston (26, 34).

6. Dispositif d'embrayage selon la revendication 5, caractérisé en ce que les deux logements qui reçoivent les pions (76) sont diamétralement opposés.

7. Dispositif d'embrayage selon l'une quelconque des revendications 1 à 6, caractérisé en ce que l'une (35) des extrémités axiales du piston d'actionnement (34) est reliée à la bague extérieure (24) du roulement (22) de la butée de débrayage par une virole sertie (44) qui s'étend en regard d'un collet radial extérieur (52) formé à ladite extrémité axiale (35) du piston d'actionnement (34).

8. Dispositif d'embrayage selon la revendication 7, caractérisé en ce que chaque logement (62) est délimité latéralement par les bords en vis-a-vis de deux pattes adjacentes (70) qui s'étendent axialement depuis le corps (46) de la virole sertie (44).

9. Dispositif d'embrayage selon la revendication 7, caractérisé en ce que chaque logement (62) est délimité latéralement par deux cloisons formées sur la surface périphérique du piston et qui s'étendent axialement depuis ladite face radiale (64) du collet (52) du piston d'actionnement (26, 34).

## Claims

1. A friction clutch assembly of the pull-to-release type, especially for a motor vehicle, in combination with a removable tool for mechanical actuation, comprising a clutch casing (10) within which there is arranged a clutch control device that comprises a clutch release bearing (20) and a hydraulic actuating device (26, 34) which includes at least one actuating piston (26, 34), one end of which works on the clutch release bearing (20) in order to urge the said release bearing axially in a first direction (F1), so as to cause disengagement of the clutch to take place when the hydraulic actuating device is supplied with fluid under pressure, characterised in that the clutch release bearing (20) is coupled to the piston (26, 34), for axial linear movement, by means of an interposed radial collar portion (52) with which the piston (26, 34) is provided for that purpose, and the casing (10) has an aperture (54) to enable the removable tool (58) to be introduced for mechanical actuation (20) such as to urge the clutch release bearing (20) axially in a second direction (F2) opposite to the first direction (F1), in that the end portion (60) of the removable tool (58), lying within the casing (10), is received in a complementary recess (62) formed in the peripheral surface of the actuating piston (26, 34) so as to engage the tool circumferentially on the piston, and in that the base (64) of each recess (62) consists of the radial surface, in facing relationship, of the collar portion (52) of the piston (26, 34).

2. A clutch assembly according to Claim 1, characterised in that the removable tool (58) is a lever, the body portion (56) of which engages against an edge (55), in facing relationship therewith, of the window (54) of the casing (10).

3. A clutch assembly according to Claim 1 or Claim 2, characterised in that the peripheral surface of the piston has a series of adjacent recesses (62) arranged in a crown formation.

4. A clutch assembly according to Claim 3, characterised in that each recess (62) is bounded laterally by two walls (66) parallel to the axis (X-X) of the piston, and axially by a base (64) at right angles to the axis of the actuating piston.

5. A clutch assembly according to Claim 1, characterised in that the end portion (60) of the tool working inside the casing (10) is made in the form of a fork, each of the branches (74) of which includes a peg (76) which is received in a recess (62) formed at the peripheral surface of the piston (26, 34).

6. A clutch assembly according to Claim 5, characterised in that the two recesses which receive the pegs (76) are diametrically opposed to each other.

7. A clutch assembly according to any one of Claims 1 to 6, characterised in that one (35) of the axial ends of the actuating piston (34) is connected to the outer ring (24) of the rolling bearing (22) of the clutch release bearing by means of a seamed shroud piece (44), which is aligned with an external radial collar portion (52) formed at the said axial end (35) of the actuating piston (34).

8. A clutch assembly according to Claim 7, characterised in that each recess (62) is bounded laterally by the edges, in facing relationship with each other, of two adjacent lugs (70) which extend axially from the body portion (46) of the seamed shroud piece (44).

9. A clutch assembly according to Claim 7, characterised in that each recess (62) is bounded laterally by two walls which are formed on the peripheral surface of the piston, and which extend axially from the said radial face (64) of the collar portion (52) of the actuating piston (26, 34).

## Patentansprüche

1. Reibungskupplungsvorrichtung in gezogener Konstruktion, insbesondere für Kraftfahrzeuge, in Kombination mit einem abnehmbaren Werkzeug zur mechanischen Betätigung, umfassend ein Kupplungsgehäuse (10), in dessen Innern eine Ausrückbetätigungsvorrichtung angeordnet ist, die ein Ausrücklager (20) und eine hydraulische Betätigungsvorrichtung (26, 34) mit wenigstens einem Betätigungskolben (26, 34) umfaßt, von dem ein Ende auf das Ausrücklager (20) einwirkt, um das besagte Ausrücklager (20) in einer ersten Richtung (F1) zu beaufschlagen, um das Ausrücken zu bewirken, wenn der hydraulischen Betätigungsvorrichtung Druckflüssigkeit zugeführt wird, **dadurch gekennzeichnet,** daß das Ausrücklager (20) geradlinig axial verschiebbar mit dem Kolben (26, 34) über einen radialen Kragen (52) verbunden ist, den der Kolben (26, 34) dazu aufweist, während das Gehäuse (10) eine Öffnung (54) enthält, um die Einführung des abnehmbaren Werkzeugs (58) zur mechanischen Betätigung zu ermöglichen, um das Ausrücklager (20) in einer zur ersten Richtung (F1) entgegengesetzten zweiten Richtung (F2) zu beanspruchen, daß das im Innern des Gehäuses (10) befindliche Ende (60) des abnehmbaren Werkzeugs (58) in eine formschlüssige Aufnahme (62) eingesetzt ist, die an der Umfangsfläche des Betätigungskolbens (26, 34) angeordnet ist, um das Werkzeug umfangsmäßig an den Kolben anzufügen, und daß der Boden (64) jeder Aufnahme durch die gegenüberliegende radiale Fläche des Kragens (52) des Kolbens (24, 36) gebildet wird.

2. Kupplungsvorrichtung nach Anspruch 1, **dadurch gekennzeichnet,** daß das abnehmbare Werkzeug (58) ein Hebel ist, dessen Körper (56) an einer gegenüberliegenden Kante (55) des Fensters (54) des Gehäuses (10) zur Anlage kommt.

3. Kupplungsvorrichtung nach Anspruch 1 oder 2, **dadurch gekennzeichnet,** daß die Umfangsfläche des Kolbens eine Reihe von kranzförmig angeordneten benachbarten Aufnahmen (62) umfaßt.

4. Kupplungsvorrichtung nach Anspruch 3, **dadurch gekennzeichnet,** daß jede Aufnahme (62) seitlich durch zwei zur Achse (X-X) des Kolbens parallele Trennwände (66) und axial durch einen zur Achse des Kolbens senkrechten Boden (64) begrenzt wird.

5. Kupplungsvorrichtung nach Anspruch 1, **dadurch gekennzeichnet,** daß das im Innern des Gehäuses (10) angeordnete Ende (60) des Werkzeugs in Form einer Gabel ausgeführt ist, deren Schenkel (74) jeweils einen Stift (76) umfassen, der in eine an der Umfangsfläche des Kolbens (26, 34) eingearbeitete Aufnahme (62) eingesetzt ist.

6. Kupplungsvorrichtung nach Anspruch 5, **dadurch gekennzeichnet,** daß die zwei Aufnahmen, welche die Stifte (76) aufnehmen, einander diametral gegenüberliegen.

7. Kupplungsvorrichtung nach einem der Ansprüche 1 bis 6, **dadurch gekennzeichnet,** daß eines (35) der axialen Enden des Betätigungskolbens (34) mit dem Außenring (24) des Wälzlagers (22) des Ausrücklagers durch einen aufgefalzten Ring (44) verbunden ist, der sich gegenüber einem äußeren radialen Kragen (52) erstreckt, der an dem besagten axialen Ende (35) des Betätigungskolbens (34) ausgebildet ist.

8. Kupplungsvorrichtung nach Anspruch 7, **dadurch gekennzeichnet,** daß jede Aufnahme (62) seitlich durch die gegenüberliegenden Kanten von zwei benachbarten Ansätzen (70) begrenzt wird, die sich vom Körper (46) des aufgefalzten Rings (44) aus axial erstrecken.

9. Kupplungsvorrichtung nach Anspruch 7, **dadurch gekennzeichnet,** daß jede Aufnahme (62) seitlich durch zwei Trennwände begrenzt wird, die an der Umfangsfläche des Kolbens ausgebildet sind und die sich axial von der besagten radialen Fläche (64) des Kragens (52) des Betätigungskolbens (26, 34) aus erstrecken.
